# EUROPÄISCHE PATENTSCHRIFT

(11) **EP 0 790 434 B1**
(45) Veröffentlichungstag und Bekanntmachung des Hinweises auf die Patenterteilung: **19.09.2001**
(21) Anmeldenummer: 96117925.6
(22) Anmeldetag: 08.11.1996
(51) Int. Cl.: F16F 15/14, F16F 7/10, F16F 3/02, F16F 15/03

(54) **Aktiver Drehschwingungstilger**
Active rotation damper
Amortisseur de rotation actif

(30) Priorität: 15.02.1996 DE 19605551
(43) Veröffentlichungstag der Anmeldung: 20.08.1997
(73) Patentinhaber: Firma Carl Freudenberg, 69469 Weinheim (DE)
(72) Erfinder: Eckel, Hans-Gerd, Dr., 69514 Laudenbach (DE); Kunkel, Anja, 69483 Siedelsbrunn (DE)

(56) Entgegenhaltungen:
- EP-A- 0 611 900
- DE-A- 4 007 770
- FR-A- 2 669 981
- GB-A- 2 265 669
- US-A- 3 648 999
- US-A- 3 940 726
- US-A- 4 535 816
- US-A- 5 452 884

## Beschreibung

Die Erfindung befaßt sich mit einem aktiven Schwingungstilger der im Oberbegriff des Anspruchs 1 umrissenen Art.

Aus US-A-5,452,884, welche der DE 41 41 637 A1 entspricht, ist ein aktives, elastisches Lager bekannt, mit dem für die beweglichen Teile eines Entkopplungssystems eine solche Auslegung angegeben wird, welche mechanisch sehr viel stabiler und ermüdungsfreier ist, auch mit größeren Tilgermassen sicher beherrscht werden kann und bei dem eine exakte Führung von Spule und Tilgermasse unter gleichzeitiger Aufnahme von Querkräften möglich ist. Die Spule ist in ihrer exakten Vertikalführung über zwei, quer zur Spule verlaufende und untereinander parallele, radialsteife Federsysteme aufgehängt. Ein solches radialsteifes Federsystem kann man dadurch erhalten, daß die Federn als Ringfedern mit einem innenliegenden Federring und einem außenliegenden Federring ausgelegt sind, welche über radiale Stege miteinander verbunden sind. Alternativ kann die Halterung von Spule und Tilgermasse durch zwei radialsteife Membranen gebildet werden, die auf der Ober- und Unterseite der Tilgermasse festgelegt und seitlich eingespannt sind.

Der Erfindung liegt die Aufgabe zugrunde, einen aktiven Schwingungstilger mit einer Tilgermasse, die durch eine Federeinrichtung an einem Auflager befestigt ist, bereitzustellen, welcher ohne nennenswert abgeändertem Aufbau eine deutlich verbesserte Energieausbeute hat.

Nach der Erfindung wird hierzu ein aktiver Schwingungstilger bereitgestellt, dessen Merkmale im Anspruche 1 angegeben sind.

Diese Auslegung der Federeinrichtung gestattet eine Parallelführung der Tilgermasse in axialer Richtung beim Dämpfungsvorgang, so daß sich der Luftspalt der Tauchspulenanordnung sehr klein wählen läßt. Aufgrund des sehr kleinen Luftspalts erhält man hierdurch wesentlich günstigere Verhältnisse hinsichtlich der Energieausbeute und somit arbeitet die Tauchspulenanordnung bei möglichst geringem Energieverbrauch äußerst effektiv. Durch die Aufteilung jeder Blattfeder in jeder Ebene in mindestens drei Federelemente, welche sich im Ruhezustand im wesentlichen senkrecht zu der Bewegungsrichtung der Tilgermasse gleichsinnig in Umfangsrichtung erstrecken, wird bei dem erfindungsgemäßen aktiven Schwingungstilger erreicht, daß man eine universelle Anpassung an die jeweils gewünschten Gegebenheiten vornehmen kann, ohne daß das Grundkonzept des aktiven Schwingungstilgers verändert zu werden braucht. Bei einer solchen Abstimmung und Anpassung kann die Anzahl der Federelemente pro Blattfederebene sowohl bei der in Umfangsrichtung gleichsinnigen Anordnung variiert werden als auch die Anzahl der zu einem Blattfederpaket pro Ebene zusammengestellten Anordnung. Somit erhält man bei dem aktiven Schwingungstilger nach der Erfindung eine sehr große Variationsvielfalt für das Dämpfungsverhalten des Schwingungstilgers.

Weitere vorteilhafte Ausgestaltungen der Erfindung sind in den Ansprüchen 2 bis 7 wiedergegeben.

Nach einer vorteilhaften Ausgestaltung ist es vorgesehen, daß die Blattfedern beiderseits an einem Tilgermassenvorsprung und an einem Auflagervorsprung festgelegt sind, die sich senkrecht zur Bewegungsrichtung der Tilgermasse erstrecken. Entsprechende Befestigungspunkte lassen sich in technischer Hinsicht besonders einfach erzeugen, beispielsweise durch mittelbares Anformen bei der Herstellung der Tilgermasse bzw. des Auflagers im Rahmen eines Gieß- oder Stanzprozesses. Während der sich anschließenden Montage ist es somit nur noch nötig, die Blattfedern mit dem jeweiligen Vorsprung zu verbinden, beispielsweise durch eine gegenseitige Verschraubung, Verklemmung, Vernietung oder Verklebung.

Die Blattfedern können den Tilgermassenvorsprung mit einem Anschlag in Umfangsrichtung derart übergreifen, daß der Anschlag mit einem Gegenanschlag des Auflagervorsprungs in Eingriff bringbar ist. Die Amplitude der schwingungsbedingten Auslenkbewegungen der Tilgermasse läßt sich hierdurch leicht auf einen Wert begrenzen, bei dem eine Überbeanspruchung der Federeinrichtung bzw. ein Anschlagen der Tilgermasse an der Tauchspule nicht mehr zu befürchten ist.

Die Endanschläge und/oder die Gegenanschläge können auf den einander zugewandten Seiten mit einem weichelastischen Anschlagpuffer versehen sein, um Anschlaggeräusche zu vermeiden. Entsprechende Anschlagpuffer können aus Gummi bestehen und durch unmittelbares Anvulkanisieren oder Ankleben mit den Endanschlägen und/oder Gegenanschlägen verbunden sein.

Die Blattfedern können aus irgendeinem der einschlägig verwendeten Werkstoffe bestehen. Bevorzugt gelangen metallische Werkstoffe oder faserverstärkte Kunstharze zur Anwendung.

Die Blattfedern können aus mehreren Einzelfedern zu einem Federpaket gestapelt, aufgebaut sein. Bei der konstruktiv vorgesehenen Blattfederlänge und bei dem maximal möglichen Federweg, bestimmt die zulässige Beanspruchung des Federwerkstoffs die Dicke der Einzelfeder.

Zur Einstellung einer definierten Federrate der Blattfedern wird die erforderliche Anzahl von Einzelfedern zu einem Federpaket gestapelt.

Die Blattfedern können zumindest in einem Teilbereich mit einer schwingungsdämpfenden Beschichtung versehen sein beispielsweise mit einer Beschichtung, die aus Fett besteht, das einen Tropfpankt oberhalb von 153°C hat. Eigenschwingungen der Blattfedern während der bestimmungsgemäßen Verwendung werden dadurch unterdrückt. Für die Erzielung eines guten Betriebsverhaltens ist das von großem Vorteil. Die vergleichweise hohe Temperaturbeständigkeit nimmt bezug auf übliche Anwendungen im Kraftfahrzeugbereich. Sie wird benötigt, um eine gute Funktion in den verschiedene Klimazonen zu erhalten.

Der Gegenstand der Erfindung wird nachfolgend anhand der Zeichnung weiter verdeutlicht. Es zeigen:
Fig. 1 einen Schwingungstilger in einer Ansicht von oben.
Fig. 2 den Schwingungstilger gemäß Figur 1 in längsgeschnittener Darstellung und geschnitten entlang der Ebene A - A.

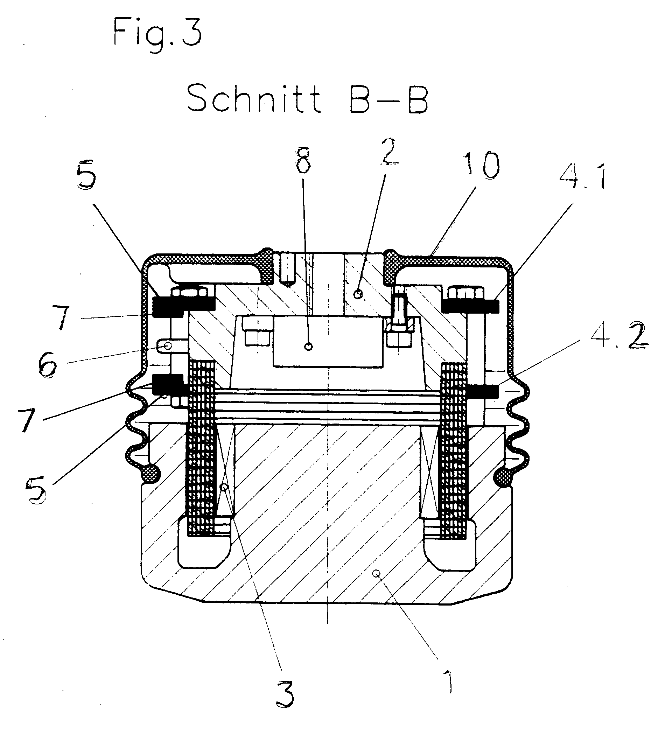

Fig. 3 den Schwingungstilger gemäß Figur 1 in längsgeschnittener Darstellung und geschnitten entlang einer Ebene B - B.

Der in der Zeichnung dargestellte Schwingungstilger umfaßt eine Tilgermasse 1, die durch eine Federeinrichtung 4 an einem Auflager 2 befestigt ist, wobei die Tilgermasse 1 mittels einer Tauchspulenanorndung 3 derart in einer Richtung hin- und herbewegbar ist, daß sich zumindest teilweise eine Unterdrückung von Relativbewegungen des Auflagers 2 in dieser Richtung in zumindest einem Frequenzbereich ergibt. Die Federeinrichtung 4 verbindet die Tilgermasse 1 und das Auflager 2 federnd miteinander. Sie wird bei dem gezeigten Ausführungsbeispiel durch zweimal drei Blattfedern 4.1, 4.2 gebildet, die sich im Ruhezustand senkrecht zur Bewegungsrichtung gleichsinnig in Umfangsrichtung erstrecken. Eine größere Anzahl von Blattfedern 4.1, 4.2 kann problemlos verwendet werden. Es ist jedoch darauf zu achten, daß die Länge der Blattfedern relativ groß bemessen ist, um eine hinreichend große Auslenkbewegung der Tilgermasse, bezogen auf das Auflager, zu gewährleisten.

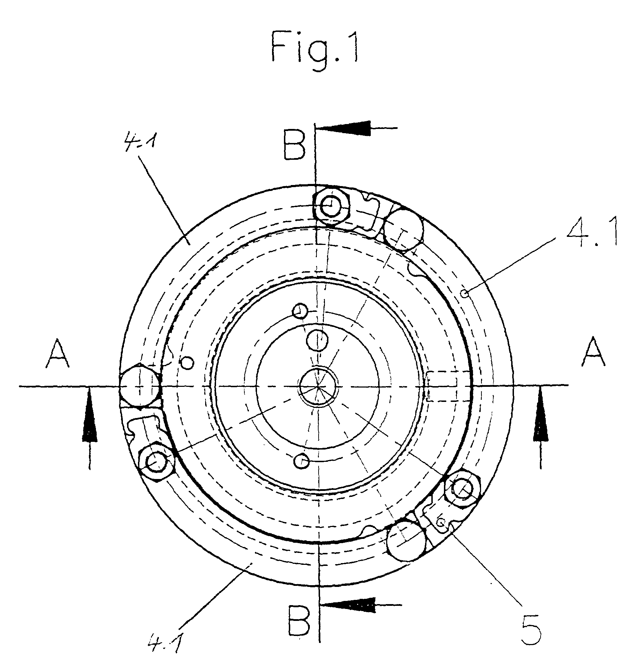

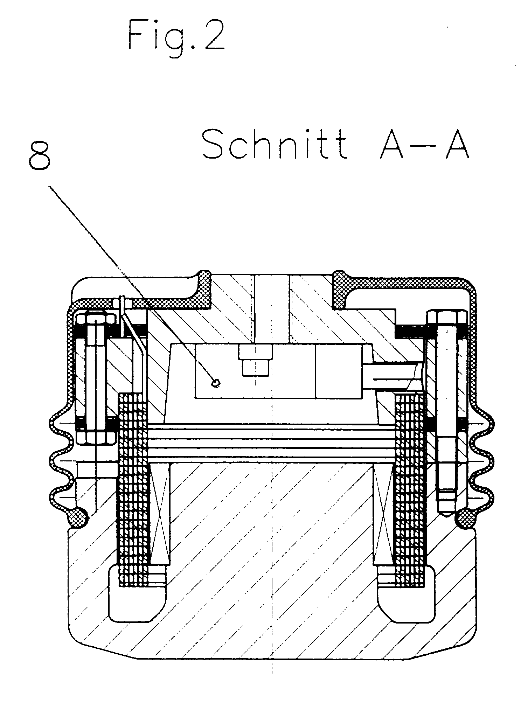

Die Blattfedern sind einerseits an einem Tilgermassenvorsprung und andererseits an einem Auflagervorsprung festgelegt, die sich beide senkrecht zu der Bewegungsrichtung der Tilgermasse 1 erstrecken. Zur Festlegung dienen Gewindebolzen, die die Blattfedern im Bereich von Bohrungen durchdringen und in eine Gewindebohrung des Tilgermassenvorsprunges bzw. des Auflagervorsprunges verschraubt sind (Figuren 1, 2).

Die Blattfedern 4.1/4.2 übergreifen den Tilgermassenvorsprung mit einem Anschlag 5 in Umfangsrichtung, wobei der Anschlag 5 mit einem Gegenanschlag 6 des Auflagervorsprungs in Eingriff bringbar ist. Die maximale Auslenkbewegung der Tilgermasse ist hierdurch auf einen festen Wert begrenzt.

Bei dem gezeigten Ausführungsbeispiel sind ferner zwei Gruppen von Blattfedern 4.1, 4.2 vorgesehen, die in der Bewegungsrichtung einen Abstand voneinander haben und die mit Anschlägen 5 versehen sind, die mit Gegenanschlägen 6 des Auflagervorsprungs in Eingriff bringbar sind. Die Tilgermasse 1 wird hierdurch sehr präzise parallel zu der Richtung geführt, was es gestattet, die Weite des in der Tauchspulenanordnung 3 enthaltenen Luftspaltes bis auf einen äußerst geringen Wert zu reduzieren. Für die Erzielung einer guten Effektivität der Tauchspulenanordnung ist das von großem Vorteil. Ein direkter Bereichung skontakt zwischen der Magnetspule und dem Magnetkern ist dennoch nicht vorhanden. Relativverlagerungen der Tilgermasse setzen daher nicht die Überwindung von Haftreibungskräften voraus.

Auslenkbewegungen der Tilgermasse in Bewegungsrichtung bedingen zwar eine gewisse hin- und hergehende Relativverdrehung. Diese kann jedoch problemlos in Kauf genommen werden insofern, als sich keinerlei Beeinträchtigung einer anderen Funktion ergibt.

Durch die Verwendung von zwei Gruppen von Blattfedern 4.1, 4.2, deren Anschläge 5 den Gegenanschlägen des Auflagervorsprungs beiderseits benachbart sind, ist die maximale Relativbeweglichkeit der Tilgermasse in beiden Richtungen auf einen festen Wert begrenzt.

Um beim Auftreten von Extrembewegungen Anschlaggeräusche zu vermeiden sind bei dem gezeigten Ausführungsbeispiel nur die Anschläge 5 auf der dem jeweiligen Gegenanschlag 6 zugewandten Seite mit einem weichelastischen Anschlagpuffer 7 versehen, beispielsweise aus Gummi. In der Zeichnung nicht erkennbar ist eine Fettbeschichtung der Blattfedern 4.1. Diese ist von geringer Dicke. Sie hat den Zweck, das Auftreten von Resonanzschwingungen der Blattfedern zu verhindern.

Bei großen Bauformen kann es vorteilhaft sein, mehrere Blattfedern in Bewegungsrichtung aufeinander zu'schichten. Die Federelastizität läßt sich auf erforderliche Werte einstellen.

Bei dem gezeigten Ausführungsbeispiel ist im Inneren des Auflagers 2 ein Sensor 8 angebracht, der es gestattet, Relativbewegungen des Auflagers 2 zu erfassen bzw. eines Aggregates, mit dem das Auflager 2 während der bestimmungsgemäßen Verwendung starr verbunden ist. Die Schwingungen werden durch den Sensor umgeformt in elektrische Signale, welche es gestatten, den Tauchspulenantrieb 3 derart zu betätigen, daß sich, bezogen auf die jeweilige Schwingung des Auflagers 2 eine gegenphasige Auslenkbewegung der Tilgermasse 1 ergibt. Die in dem Auflager 2 wirksamen Schwingungen lassen sich dadurch zumindest anteilig verringern.

Bei dem gezeigten Ausführungsbeispiel sind sämtliche funktionswesentlichen Teile durch einen wasserdichten Faltenblag 10 geschützt, der die Tilgermasse 1 und das Auflager 2 wasserdicht verbindet. Der Faltenbalg 10 wurde in Figur 1 aus Gründen der verbesserten Anschaulichkeit weggelassen. Er wird bevorzugt aus niederdämpfendem Elastomer hergestellt.

## Patentansprüche

1. Aktiver Schwingungstilger, umfassend eine Tilgermasse (1), die durch eine Federeinrichtung (4) an einem Auflager (2) befestigt ist, wobei die Tilgermasse (1) mittels einer Tauchspulenanordnung (3) derart in einer Richtung hin- und herbewegbar ist, daß sich zumindest teilweise eine Unterdrückung von Relativbewegungen des Auflagers (2) in dieser Richtung in zumindest einem Frequenzbereich ergibt, wobei die Federeinrichtung (4) die Tilgermasse (1) und das Auflager (2) federnd miteinander verbindet, **dadurch gekennzeichnet, daß** die Federeinrichtung (4) durch jeweils zumindest drei voneinander unabhängig angeordnete Blattfedern (4.1), (4.2) in zumindest zwei in Bewegungsrichtung der Tilgermasse (1) beabstandeten Ebenen gebildet ist, die sich im Ruhezustand im wesentlichen senkrecht zu der Bewegungsrichtung der Tilgermasse gleichsinnig in Umfangsrichtung erstrecken.

2. Schwingungstilger nach Anspruch 1, **dadurch gekennzeichnet, daß** die Blattfedern (4.1) einerseits an einem Tilgermassenvorsprung und andererseits an einem Auflagervorsprung festgelegt sind.

3. Schwingungstilger nach Anspruch 2, **dadurch gekennzeichnet, daß** die Blattfedern (4.1), (4.2) den Tilgermassenvorsprung mit einem Anschlag (5) in Umfangsrichtung übergreifen und daß der Anschlag (5) mit einem Gegenanschlag (6) des Auflagervorsprungs in Eingriff bringbar ist.

4. Schwingungstilger nach Anspruch 3, **dadurch gekennzeichnet, daß** die Anschläge (5) und/oder die Gegenanschläge (6) auf den einander zugewandten Seiten mit einem weichelastischen Anschlagpuffer (7) versehen sind.

5. Schwingungstilger nach einem der Ansprüche 1 bis 4, **dadurch gekennzeichnet, daß** die Blattfedern (4.1), (4.2) jeweils durch ein Federpaket gebildet sind.

6. Schwingungstilger nach Anspruch 5, **dadurch gekennzeichnet, daß** die Blattfedern (4.1), (4.2) zumindest in einem Teilbereich mit einer schwingungsdämpfenden Beschichtung versehen sind.

7. Schwingungstilger nach Anspruch 6, **dadurch gekennzeichnet, daß** die Beschichtung aus Fett besteht, das einen Tropfpunkt oberhalb von 153°C hat.

## Claims

1. An active vibration absorber, comprising an absorber mass (1), which is secured on a support (2) by a spring device (4), it being possible to move the absorber mass (1) backwards and forwards in one direction by means of a solenoid arrangement (3) in such a way that there is at least partial suppression of relative movements of the support (2) in this direction in at least one frequency range, the spring device (4) connecting the absorber mass (1) and the support (2) resiliently to one another, **characterized in that** the spring device (4) is formed by in each case at least three leaf springs (4.1), (4.2), which are arranged independently of one another in at least two planes spaced apart in the direction of movement of the absorber mass (1) and extend in the same sense in the circumferential direction, essentially perpendicular to the direction of movement of the absorber mass, in the state of rest.

2. A vibration absorber according to claim 1, **characterized in that** the leaf springs (4.1) are fixed on a projection of the absorber mass on the one side, and on a projection of the support on the other side.

3. A vibration absorber according to claim 2, **characterized in that** the leaf springs (4.1), (4.2) overlap the projection of the absorber mass in the circumferential direction by means of a stop (5) and in that the stop (5) can be brought into engagement with a counterstop (6) of the projection of the support.

4. A vibration absorber according to claim 3, **characterized in that** the stops (5) and/or counterstops (6) are provided on the mutually facing sides with a soft-elastic stop buffer (7).

5. A vibration absorber according to any one of claims 1 to 4, **characterized in that** the leaf springs (4.1), (4.2) are each formed by a spring assembly.

6. A vibration absorber according to claim 5, **characterized in that** the leaf springs (4.1), (4.2) are provided in at least a partial area with a vibration-damping coating.

7. A vibration absorber according to claim 6, **characterized in that** the coating is composed of grease that has a drop point above 153° C.

## Revendications

1. Amortisseur de vibration actif, comprenant une masse d'amortissement (1) qui est fixée par un dispositif à ressort (4) à un support (2), la masse d'amortissement (1) pouvant aller et venir dans un sens à l'aide d'un dispositif à bobine mobile (3) de manière telle qu'il résulte au moins partiellement une suppression des mouvements relatifs du support (2) dans ce sens dans au moins une zone de fréquences, le dispositif à ressort (4) reliant ensemble la masse d'amortissement (1) et le support (2) de façon élastique, **caractérisé en ce que** le dispositif à ressort (4) est formé par, à chaque fois, au moins trois ressorts à lames (4.1), (4.2) disposés indépendamment les uns des autres, dans au moins deux plans espacés dans le sens de déplacement de la masse d'amortissement (1), et qui s'étendent à l'état de repos essentiellement perpendiculairement au sens de déplacement de la masse d'amortissement de même sens dans le sens circonférentiel

2. Amortisseur de vibration selon la revendication 1, **caractérisé en ce que** les ressorts à lames (4.1) sont fixés, d'une part, à une partie en saillie de la masse d'amortissement et, d'autre part, à une partie en saillie du support.

3. Amortisseur de vibration selon la revendication 2, **caractérisé en ce que** les ressorts à lames (4.1), (4.2) recouvrent d'une butée (5) la partie en saillie de la masse d'amortissement dans le sens circonférentiel et en ce que la butée (5) peut être amenée en prise avec une contre-butée (6) de la partie en saillie du support.

4. Amortisseur de vibration selon la revendication 3, **caractérisé en ce que** les butées (5) et/ou les contre-butées (6) sont dotées sur les côtés orientés l'un vers l'autre d'un tampon de butée (7) souple.

5. Amortisseur de vibration selon l'une des revendications 1 à 4, **caractérisé en ce que** les ressorts à lames (4.1), (4.2) sont à chaque fois formés par un bloc-ressort.

6. Amortisseur de vibration selon la revendication 5, **caractérisé en ce que** les ressorts à lames (4.1), (4.2) sont dotés au moins dans une zone partielle d'une enduction amortissant les vibrations.

7. Amortisseur de vibration selon la revendication 6, **caractérisé en ce que** l'enduction est composée d'une graisse ayant une température de suintement supérieure à 153°C.
